Europäisches Patentamt

European Patent Office

Office européen des brevets

(19)

(11) Veröffentlichungsnummer: **0 097 901**
**B1**

(12) **EUROPÄISCHE PATENTSCHRIFT**

(45) Veröffentlichungstag der Patentschrift: **30.09.87**

(21) Anmeldenummer: **83106009.0**

(22) Anmeldetag: **20.06.83**

(51) Int. Cl.⁴: **F 16 L 11/11**

(54) Schlauchleitung mit einem in oder an der Innenwand verlaufenden mechanischen Stützelememt (Armierung) in Form einer Drahtwendel.

(30) Priorität: **28.06.82 DE 3224273**

(43) Veröffentlichungstag der Anmeldung:
**11.01.84 Patentblatt 84/02**

(45) Bekanntmachung des Hinweises auf die
Patenterteilung:
**30.09.87 Patentblatt 87/40**

(84) Benannte Vertragsstaaten:
**AT BE DE FR IT NL SE**

(56) Entgegenhaltungen:
**DE-A-1 915 153**
**GB-A- 809 112**
**GB-A- 813 505**
**GB-A- 933 172**
**US-A-2 524 522**
**US-A-2 890 264**
**US-A-3 928 715**

(73) Patentinhaber: **Siemens Aktiengesellschaft**
**Berlin und München**
**Wittelsbacherplatz 2**
**D-8000 München 2 (DE)**

(72) Erfinder: **Siemeyer, Andreas, Dr. Ing.**
**Imberstrasse 33**
**D-7500 Karlsruhe 41 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 097 901 B1

**Beschreibung**

. Die Erfindung bezieht sich auf eine Schlauchleitung mit mindestens einem in oder an der Innenwand verlaufenden mechanischen Stützelement in Form einer Drahtwendel, welche zugleich als elektrischer Leiter ausgebildet und an ihren aus der Schlauchleitung herausgeführten Enden mit elektrischen Anschlußmitteln versehen ist.

Eine derartige Schlauchleitung ist aus der US—A—25 24 522 bekannt. Neben ihrer Funktion als Stütz- und Verstärkungselement dienen die Drahtwendeln zur Übertragung von elektrischer Energie zwischen zwei über die Schlauchleitung verbundenen Geräten, z.B. bei Staubsaugern.

Ein spezielles Anwendungsgebiet von flexiblen Schlauchleitung mit einer Drahtwendel als Stützelement ist auch die industrielle und medizinische Analysentechnik.

Hier müssen Proben zu analysierender Gase oder Gasgemische aus nicht ortsfest angeordneten Probennehmern, z.B. einem Ansaugrohr oder einem Mundstück, dem Analysengerät zur Weiterverarbeitung zugeleitet werden.

Es werden häufig Schlauchleitungen in Form von Wellschläuchen oder Schlauchwendeln eingesetzt, die sowohl längs dehnbar wie quer biegbar sind.

Zur Vermeidung von Fehlmessungen muß bei der Zuleitung von Gasgemischen über größere Strecken dafür Sorge getragen werden, daß zwischen Probennahme und Analyse die Gastemperatur nicht unter die Taupunkttemperatur einer der Komponenten des Gasgemischs absinkt.

Bekannt ist, Schlauchleitungen für den Transport zäher Flüssigkeiten elektrisch zu beheizen, insbesondere durch eine auf die Außenfläche der Leitung oder als Zwischenschicht aufgebrachte elektrische Widerstandsheizung, siehe z.B. GB—A—813 505 und DE—Al—19 15 153.

Dies ist jedoch bei stark flexiblen Schlauchleitungen relativ geringen Durchmessers, insbesondere bei Wellschläuchen und gewendelten Leitungen, mit erheblichen Schwierigkeiten verbunden.

Es besteht somit die Aufgabe, mit einfachen Mitteln eine Möglichkeit zur elektrischen Beheizung und Thermostatisierung von Medien zu schaffen, die in Schlauchleitungen der eingangs genannten Art, insbesondere in Wellschläuchen oder Schlauchwendeln, gefördert werden.

Eine Lösung der Aufgabe wird erfindungsgemäß in einer Schlauchleitung mit den Merkmalen des Anspruchs 1 gesehen.

Es ist so möglich, eine als mechanisches Stützelement vorhandene Drahtwendel an eine elektrische Stromquelle anzuschließen und als Heizwiderstand zu betreiben bzw. einen elektrischen Heizwiderstand in Form einer Drahtwendel so in der Schlauchleitung anzubringen, daß er zugleich als mechanisches Stützelement wirkt.

Darüber hinaus wird die Drahtwendel oder eine der Drahtwendeln auch noch als Widerstandsthermometer, d.h. als Meßwiderstand einer Temperaturregeleinrichtung, eingesetzt.

Weitere Einzelheiten und Vorteile der Erfindung sind aus den folgenden Beschreibungen von Ausführungsbeispielen in Verbindung mit den Unteransprüchen zu entnehmen.

Figur 1 zeigt Ausschnitte von Wellrohren oder -schläuchen mit unterschiedlichen Anordnungen der Drahtwendel.

Figur 2 zeigt im Schnitt eine Schlauchwendel mit eingelegten Drahtwendeln.

Figur 3 zeigt schematisiert eine Schlauchleitung mit elektrischen Anschluß- und Verbindungsmöglichkeiten.

Figur 4 ist das Schaltschema einer Temperaturmeß- und -regelanordnung mit der Drahtwendel einer Schlauchleitung als Meß- und Heizwiderstand.

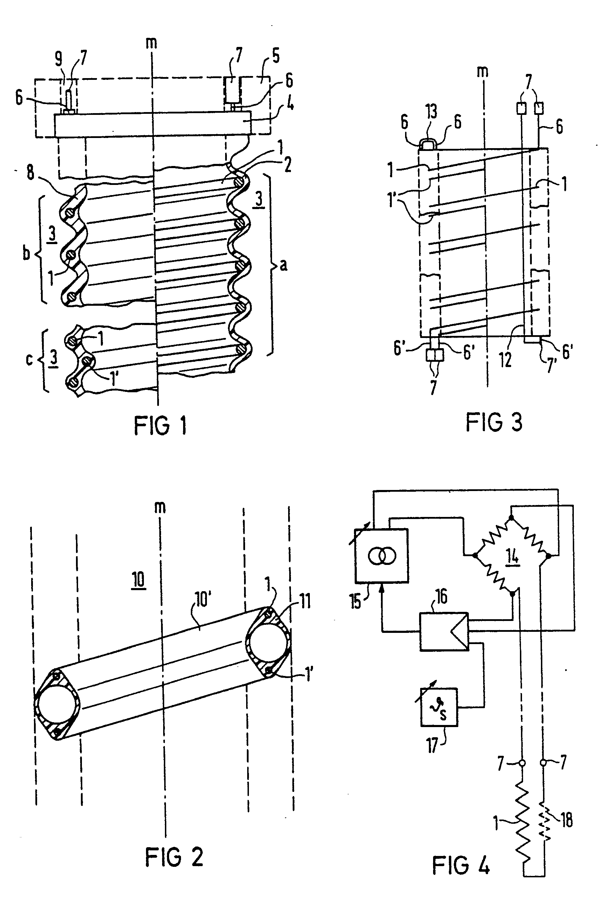

In Figur 1 sind verschiedene Ausführungsmöglichkeiten der beheizbaren Schlauchleitung in Form verschiedener Abschnitte und Ausschnitte in nicht maßstäblicher, Darstellung gezeigt. In dem Rohrlängsschnitt a rechts der Mittellinie m ist ein mechanisches Stützelement in Form einer Drahtwendel 1 aus Strahldraht zu sehen, auf die ein Kunststoffschlauch 2 aufgeschrumpft ist und so eine Schlauchleitung in Form eines Wellschlauchs 3 gebildet wird.

Das in der Figur dargestellte obere Ende 4 des Wellschlauches 3 ist mit einem gestrichelt angedeuteten Kupplungsstück 5 versehen zum Anschluß an eine weiterführende Leitung. Das dort befindliche Ende 6 der Drahtwendel 1 ist herausgeführt und mit einem elektrischen Anschlußmittel 7 versehen, hier mit einer Steckbuchse, die in dem Kupplungsstück 5 festgelegt ist.

In dem Abschnitt b links der Mittellinie m ist eine andere Ausführungsform eines Wellrohrs oder -schlauchs 3 gezeigt, bei welchem innerhalb eines gewellten Kunststoffmantels 8 die als Stütz- und Heizelement und Meßwiderstand wirkende Drahtwendel 1 angeordnet ist. Das Ende 6 der Drahtwendel 1 ist mit einem elektrischen Anschlußmittel 7, hier einem Steckerstift, versehen, welcher in einer Vertiefung 9 des Kupplungsstücks 5 angeordnet ist.

Die Wellrohrausführung 3 im Abschnitt c ist mit zwei Drahtwendeln 1 und 1' ausgestattet, welche mit parallelen Windungen koaxial zueinander angeordnet sind.

Die Drahtwendel 1 kann aus Stahldraht der für Schlauchbewehrungen üblicher Art bestehen oder, für besondere Anwendungsfälle, aus speziellem Drahtmaterial, beispielsweise Nickeleisen, wie es für elektrische Heiz- und/oder Meßwiderstände mit einem Temperaturkoeffizienten von ca. 3%/10°C verwendet wird.

Figur 2 zeigt eine halbe Windung 10' einer in Zeichenebene geschnittenen Schlauchwendel 10, in deren Kunststoffmantel 11 die zwei Drahtwendeln 1 und 1' einander gegenüberliegend parallel angeordnet sind. Sie dienen auch hier als mechanisches Stütz- und Federelement. Die hier nicht eingezeichneten elektrischen Anschlüsse für die Drahtwendeln können, wie auch bei anderen Ausführungen, beliebig gewählt werden.

Da erfindungsgemäß die Drahtwendeln 1 bzw.

1' neben ihrer Funktion als Stützelemente auch noch die von elektrischen Heizwiderständen und Meßwiderständen zu erfüllen haben und zu diesem Zweck mit elektrischen Anschlußmitteln 7 versehen sind, werden in Figur 3 verschiedene Schaltungsmöglichkeiten aufgezeigt. In der rechts der Mittellinie m dargestellten Ausführung mit einer Drahtwendel 1 ist deren oberes Ende 6—wie bereits gezeigt—herausgeführt und mit einem elektrischen Anschlußmittel 7 in Form einer Steckbuchse versehen. Das untere Ende 6' ist ebenfalls herausgeführt, mit einer anderen Art von elektrischem Anschlußmittel 7', z.B. einer Lötfahne, versehen, an welche ein flexibler elektrischer Leiter 12, beispielsweise eine isolierte Drahtlitze, angeschlossen, im Innern der Schlauchleitung wieder zu deren oberem Ende zurückgeführt und dort ebenfalls mit einem entsprechenden Anschlußmittel 7 versehen ist. Der elektrische Leiter 12 ist mit der Drahtwendel 1 in Reihe geschaltet und dient als Rückleitung. Sind seine Enden in den hier nicht gezeichneten oberen und unteren Kupplungsstücken der Schlauchleitung festgelegt, kann seine Länge so bemessen werden, daß er gleichzeitig als mechanische Begrenzung der axialen Dehnung der Schlauchleitung dient.

Bei einer Schlauchleitung in Form einer Schlauchwendel nach Figur 2 ist der elektrische Leiter 12 entsprechend durch den von der Schlauchwendel 10 umschlossenen Innenraum zu führen.

In dem Abschnitt links der Mittellinie m der Figur 3 sind die Möglichkeiten der elektrischen Schaltung von zwei mechanisch parallel angeordneten Drahtwendeln 1 und 1' angegeben, die an dem oberen Ende der Schlauchleitung herausgeführten Enden 6 der beiden Drahtwendel 1 und 1' sind über einen Kruzschlußbügel 13 miteinander verbunden, die anderen Enden 6' der beiden Drahtwendel 1 und 1' sind mit elektrischen Anschlußmitteln 7, beispielsweise einer Doppelsteckbuchse, versehen.

Die Drahtwendel 1 und 1' sind somit elektrisch in Reihe geschaltet, wobei beide Drahtwendel als Widerstandselemente gleicher Art dienen. Durch Verwendung zweier unterschiedlicher Drahtmaterialien und/oder -querschnitte ist es auch möglich, eine der Wendeln aus Heizelement, die andere als Rückleitung auszubilden.

Zur Erwärmung oder Thermostatisierung von in derartigen Schlauchleitungen geförderten Fluiden läßt sich die Drahtwendel 1 bzw. die Drahtwendeln 1 und 1' mit Hilfe der elektrischen Anschlußmittel 7 an eine elektrische Stromquelle anschließen, deren Stromstärke gemäß dem aus Drahtlänge, -querschnitt und -material bestimmten elektrischen Widerstand und der zu erreichenden Solltemperatur gewählt wird.

Die Drahtwendel 1 wird neben ihren Funktionen als mechanisches Stützelement und als elektrischer Heizwiderstand auch noch als Teil eines elektrischen Widerstandsthermometers, also als Temperaturmeßwiderstand, eingesetzt. In Figur 4 ist eine derartige Schaltung dargestellt.

Die Drahtwendel 1 bildet als temperaturabhängiger Meßwiderstand einen Zweig einer Widerstandsmeßbrücke 14, die so ausgelegt ist, daß der von einer regelbaren Stromquelle 15 gelieferte Brückenspeisestrom in der Drahtwendel 1 die für ihre Funktion als Widerstandsheizelement erforderliche Wärmeenergie erzeugen kann.

Das Ausgangssignal der Widerstandsmeßbrücke 14 ist als Regelgröße auf den Eingang eines Reglers 16 geschaltet, die Führungsgröße des Reglers 16 wird in dem Sollwertgeber 17 als Soll-Temperatur $\theta_s$ eingestellt. Das Ausgangssignal des Reglers 16 wirkt als Stellgröße auf die einstellbare Stromquelle 15, derart, daß bei Abweichungen von dem eingestellten Soll-Temperaturwert der Stromfluß durch die Brücke und damit durch die Drahtwendel 1 erhöht oder erniedrigt wird.

Bevorzugtes Anwendungsgebiet derartig ausgestatteter und betriebener Schlauchleitungen ist die Gasnalysetechnik, wo sie zwischen Probennehmer und Gasanalysegerät eingeschaltet sind. Damit bei dem durch die Schlauchleitung transportierten und zu analysierenden Gasgemisch keine Änderungen in der Zusammensetzung auftreten, muß das Gasgemisch auf einer Temperatur gehalten werden, die über den Taupunkttemperaturen der Gemischkomponenten liegt. Mit einer Schaltungsanordnung gemäß Figur 4 kann eine derartige Temperatur eingestellt und mit Hilfe der Regelung eingehalten werden. Der besondere Vorteil ist bei der Messung darin zu sehen, daß sich der Meßwiderstand, nämlich die Drahtwendel 1, über die ganze Schlauchlänge erstreckt und so eine gegenüber der üblichen punktförmigen Temperaturmessung erhöhte Genauigkeit erzielt wird.

Um beim Auswechseln einer Schlauchleitung mit erfindungsgemäß ausgebildeter Drahtwendel nicht einen erneuten Abgleich der Meßbrücke vornehmen zu müssen, kann in dem Kupplungsstück 5 oder an einem anderen Ort einer Schlauchleitung ein Abgleichwiderstand 18 angeordnet werden, der die bei Serienfertigung oder Verwendung handelsüblicher bewehrter Schlauchleitungen unvermeidlichen Toleranzen und Abweichungen des Widerstandswerts ausgleicht. Neben der gezeigten seriellen Anordnung des Abgleichswiderstandes ist wahlweise auch eine Parallelschaltung möglich. Bei der Verwendung von Schlauchleitungen mit zwei elektrisch unabhängigen Drahtwendeln können diese durch Wahl des Widerstandsmaterials und des Querschnitts so ausgelegt werden, daß die niederohmige Wendel ausschließlich als Heizwendel benutzt wird, während die zweite, hochohmige Wendel als Temperaturmeßfühler dient. Diese Ausführung ermöglicht eine direkte Messung der Wandtemperatur, unbeeinflußt, von dem Temperaturgefälle zwischen Heizwendel und Schlauchwandung.

**Patentansprüche**

1. Schlauchleitung mit mindestens einem in oder an der Innenwand verlaufenden mechanischen Stützelement in Form einer Drahtwendel (1, 1'), welche zugleich als elektrischer Leiter ausgebildet und an ihren aus der Schlauchleitung herausgeführten Enden mit elektrischen anschlußmitteln (7) versehen ist, dadurch gekennzeichnet, daß mindestens eine der Drahtwendeln (1, 1') als Heizwiderstand einer elektrischen Widerstandsheizeinrichtung ausgebildet ist und mindestens eine der Drahtwendeln als temperaturabhängiger Meßwiderstand einer Temperaturregeleinrichtung (14, 15, 16, 17) für die Widerstandsheizung ausgebildet ist.

2. Schlauchleitung nach Anspruch 1, dadurch gekennzeichnet, daß eine zweite, parallel zur ersten verlaufende Drahtwendel (1') mit der ersten Drahtwendel (1) in Reihe geschaltet und als Heizwiderstand, Meßwiderstand oder als Rückleitung ausgebildet ist.

3. Schlauchleitung nach Anspruch 1, dadurch gekennzeichnet, daß die Drahtwendel (1, 1') in der Wand eines Wellschlauches (3) angeordnet ist.

4. Schlauchleitung nach Anspruch 1, dadurch gekennzeichnet, daß die Drahtwendel (1, 1') in der Wand einer Schlauchwendel (10) angeordnet ist.

5. Schlauchleitung nach Anspruch 3 oder 4, dadurch gekennzeichnet, daß innerhalb des Wellschlauchs (3) oder der Schlauchwendel (10) ein flexibler elektrischer Leiter (12) von solchen Abmessungen verläuft, daß er, in Reihe mit der Drahtwendel (1) geschaltet, als elektrische Rückleitung und gleichzeitig als mechanische Begrenzung der axialen Dehnung der Schlauchleitung wirkt.

6. Schlauchleitung nach Anspruch 1, dadurch gekennzeichnet, daß die Drahtwendel (1) als Meßwiderstand in einem Brückenzweig einer aus einer regelbaren Stromquelle (15) gespeisten Widerstandsbrücke (14) liegt, deren der Temperatur der Drahtwendel (1) entsprechende Ausgangsgröße als Regelgröße einem dem Brückenspeisestrom einstellenden Regler (16) aufgeschaltet ist.

7. Verwendung einer Schlauchleitung nach einem oder mehreren der vorhergehenden Ansprüche als Probenzuführungsleitung bei Gasanalysegeräten.

**Revendications**

1. Conduite en forme de tuyau souple comportant au moins un élément de renforcement mécanique s'étendant dans ou sur la paroi intérieure et réalisé sous la forme d'un fil hélicoïdal (1, 1'), qui est agencé simultanément sous la forme d'un conducteur électrique et comporte, au niveau de ses extrémités ressorties hors de la conduite en forme de tuyau souple, des moyens de raccordement électrique (7), caractérisée par le fait qu'au moins l'un des fils hélicoïdaux (1, 1') est réalisé sous la forme d'une résistance de chauffage d'un dispositif de chauffage électrique à résistance, et qu'au moins l'un des fils hélicoïdaux est réalisé sous la forme d'une résistance de mesure, qui dépend de la température, d'un dispositif (14, 15, 16, 17) de réglage de la température pour le chauffage à résistance.

2. Conduite en forme de tuyau souple suivant la revendication 1, caractérisée par le fait qu'un second fil hélicoïdal (1') parallèle au premier fil hélicoïdal (1) est branché en série avec ce dernier et est réalisé sous la forme d'une résistance chauffante, d'une résistance de mesure ou d'un conducteur de retour.

3. Conduite en forme de tuyau souple suivant la revendication 1, caractérisée par le fait que le fil hélicoïdal (1, 1') est disposé dans la paroi d'un tuyau ondulé.

4. Conduite en forme de tuyau souple suivant la revendication 1, caractérisée par le fait que le fil hélicoïdal (1, 1') est disposé dans la paroi d'un tuyau hélicoïdal (10).

5. Conduite en forme de tuyau souple suivant la revendication 3 ou 4, caractérisé par le fait qu'à l'intérieur du tuyau ondulé (3) ou du tuyau hélicoïdal (10) se trouve disposé un conducteur électrique flexible (12) qui possède des dimensions telles que, lorsqu'il est branché en série avec le fil hélicoïdal (1), il agit en tant que conducteur électrique de retour et simultanément en tant que dispositif de limitation mécanique de l'extension axiale de la conduite en forme de tuyau souple.

6. Conduite en forme de tuyau souple suivant la revendication 1, caractérisée par le fait que le fil hélicoïdal (1) est disposé, en tant que résistance de mesure, dans une branche d'un pont de résistances (14) alimenté par une source de courant réglable (15) et dont la grandeur de sortie, qui correspond à la température du fil hélicoïdal (1), est appliquée en tant que grandeur de réglage à un régulateur (16) réglant le courant d'alimentation du pont.

7. Application d'une conduite en forme de tuyau souple suivant l'une ou plusieurs des revendications précédentes en tant que conduite d'amenée d'échantillons dans es appareils d'analyse de gaz.

**Claims**

1. A hose line having at least one mechanical reinforcement in the form of a wire coil (1, 1'), running in or at the inner wall and at the same time forming an electrical conductor and being provided with electrical terminals at its ends which are led out of the hose line, characterised in that at least one of the wire coils (1, 1') forms the heating resistor of an electrical resistance heating device, and at least one of the wire coils forms the temperature-dependent measuring resistor of a temperature-regulating device (14, 15, 16, 17) for the resistance heating.

2. A hose line as claimed in Claim 1, characterised in that a second wire coil (1'), running parallel to the first is connected in series with the first wire coil (1) and serves as heating resistor, measuring resistor or as a return line.

3. A hose line as claimed in Claim 1, characterised in that the wire coil (1, 1') is arranged in the wall of a corrugated hose (3).

4. A hose line as claimed in Claim 1, characterised in that the wire coil (1, 1') is arranged in the wall of a coiled hose (10).

5. A hose line as claimed in Claim 3 or 4, characterised in that a flexible electrical conductor runs inside the corrugated hose (3) or the coiled hose (10) and is of such dimensions that, when connected in series with the wire coil, it is effective as an electrical return line and at the same time as a mechanical means for restricting the axial extension of the hose line.

6. A hose line as claimed in Claim 1, characterised in that the wire coil (1) serving as a measuring resistor is situated in the arm of a resistance bridge (14) which is supplied from an adjustable current source (15), and the output of this bridge, which corresponds to the temperature of the wire coil (1), is superimposed as a control variable on a regulator (16) which adjusts the current supplied to the bridge.

7. The use of a hose line as claimed in one or more of the previous claims as a supply line for samples in gas-analysis devices.

FIG 1

FIG 3

FIG 2

FIG 4

1